# EUROPÄISCHE PATENTSCHRIFT

(11) **EP 3 377 701 B1**
(45) Veröffentlichungstag und Bekanntmachung des Hinweises auf die Patenterteilung: **18.08.2021**
(21) Anmeldenummer: 16770246.3
(22) Anmeldetag: 16.09.2016
(51) Int. Cl.: E01F 13/12, E04H 6/12, B62D 15/02

(54) **VERFAHREN UND VORRICHTUNG ZUM ABSICHERN EINER BEWEGUNG EINES KRAFTFAHRZEUGS AUF EINER SCHRÄGEN RAMPE**
METHOD AND DEVICE FOR SECURING MOTION OF A MOTOR VEHICLE ON AN INCLINED RAMP
PROCÉDÉ ET DISPOSITIF POUR SÉCURISER UN DÉPLACEMENT D'UN VÉHICULE AUTOMOBILE SUR UNE RAMPE INCLINÉE

(30) Priorität: 20.11.2015 DE 102015222930
(43) Veröffentlichungstag der Anmeldung: 26.09.2018
(73) Patentinhaber: Robert Bosch GmbH, 70442 Stuttgart (DE)
(72) Erfinder: BONNET, Christophe, 70771 Leinfelden-Echterdingen (DE); NORDBRUCH, Stefan, 70806 Kornwestheim (DE); QUAST, Gerrit, 72622 Nuertingen (DE); SCHWEIGER, Roland, 89231 Neu-Ulm (DE); MOSER, Martin, 70736 Fellbach (DE)
(86) Internationale Anmeldenummer: PCT/EP2016/071957
(87) Internationale Veröffentlichungsnummer: WO 2017/084786

(56) Entgegenhaltungen:
- EP-A2- 0 816 599
- WO-A1-01/79627
- DE-A1- 1 684 756
- US-A1- 2006 045 618
- US-A1- 2015 146 001

## Beschreibung

Die Erfindung betrifft ein Verfahren und eine Vorrichtung zum Absichern einer Bewegung eines Kraftfahrzeugs auf einer schrägen Rampe. Die Erfindung betrifft ferner einen Parkplatz sowie ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition in eine Zielposition.

Die DE 16 84 756 A1 zeigt eine Hebebühne für Fahrzeuge, insbesondere zum Abstellen von Fahrzeugen übereinander, die von Lenkern getragen wird, wobei die Lenker aus einer Anzahl gelenkig verbundener Glieder bestehen, die sich beim Anheben fortschreitend gegeneinander abstützen. Dabei können Sperren vorgesehen sein, die eine weitere Vorwärts- oder Rückwärtsbewegung des Fahrzeugs bei angehobener Hebebühne verhindern.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Parkhäuser umfassen in der Regel mehrere Geschosse, die über Rampen miteinander verbunden sind. Sofern zum Beispiel ein Bremssystem eines Fahrzeugs versagt, wenn es gerade auf der Rampe fährt, so besteht die Gefahr, dass das Fahrzeug unkontrolliert die Rampe hinunterfährt und gegebenenfalls mit Objekten, zum Beispiel Personen, Wänden, Pfeilern oder weiteren Fahrzeugen, kollidiert.

### Offenbarung der Erfindung

Die der Erfindung zugrunde liegende Aufgabe ist darin zu sehen, ein effizientes Konzept zum effizienten Absichern einer Bewegung eines Kraftfahrzeugs auf einer schrägen Rampe bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Absichern einer Bewegung eines Kraftfahrzeugs auf einer schrägen Rampe bereitgestellt, wobei abschüssig vom Kraftfahrzeug ein oder mehrere Kollisionsobjekte in einen durch die Rampe vorgegebenen Fahrweg bewegt werden, um im Fall einer abschüssigen Bewegung des Kraftfahrzeugs auf dem Fahrweg durch eine Kollision des einen oder der mehreren Kollisionsobjekte mit dem Kraftfahrzeug eine Geschwindigkeit des Kraftfahrzeugs noch auf der Rampe zu reduzieren, wobei über ein Kommunikationsnetzwerk eine vom Kraftfahrzeug ausgesendete Fehlermeldung von einer Kommunikationsschnittstelle empfangen wird, wobei das oder die mehreren Kollisionsobjekte ansprechend auf die empfangene Fehlermeldung von einer Bewegungseinrichtung in den Fahrweg bewegt werden.

Nach einem anderen Aspekt wird eine Vorrichtung zum Absichern einer Bewegung eines Kraftfahrzeugs auf einer schrägen Rampe bereitgestellt, umfassend ein oder mehrere Kollisionsobjekte und eine Bewegungseinrichtung zum Bewegen des oder der mehreren Kollisionsobjekte in einen durch die Rampe vorgegebenen Fahrweg abschüssig vom Kraftfahrzeug, um im Fall einer abschüssigen Bewegung des Kraftfahrzeugs auf dem Fahrweg durch eine Kollision des einen oder der mehreren Kollisionsobjekte mit dem Kraftfahrzeug eine Geschwindigkeit des Kraftfahrzeugs noch auf der Rampe reduzieren zu können, wobei eine Kommunikationsschnittstelle vorgesehen ist, die ausgebildet ist, über ein Kommunikationsnetzwerk eine vom Kraftfahrzeug ausgesendete Fehlermeldung zu empfangen, wobei die Bewegungseinrichtung ausgebildet ist, ansprechend auf die empfangene Fehlermeldung das oder die mehreren Kollisionsobjekte in den Fahrweg zu bewegen.

Nach einem anderen Aspekt wird ein Parkplatz bereitgestellt, welcher eine schräge Rampe und die Vorrichtung zum Absichern einer Bewegung eines Kraftfahrzeugs auf einer schrägen Rampe umfasst. Nach einem anderen Aspekt wird ein Computerprogramm bereitgestellt, welches Programmcode zur Durchführung des Verfahrens zum Absichern einer Bewegung eines Kraftfahrzeugs auf einer schrägen Rampe umfasst, wenn das Computerprogramm auf einem Computer, insbesondere auf der Vorrichtung zum Absichern einer Bewegung eines Kraftfahrzeugs auf einer schrägen Rampe, ausgeführt wird.

Die Erfindung umfasst also unter anderem den Gedanken, ein oder mehrere Kollisionsobjekte vorzusehen, die in einen Fahrweg eines sich auf einer schrägen Rampe befindlichen Kraftfahrzeugs bewegt werden, sodass diese mit dem Kraftfahrzeug kollidieren, wenn das Kraftfahrzeug die Rampe hinunterfährt oder sich die Rampe hinunterbewegt. Durch die Kollision wird zumindest ein Teil der kinetischen Energie, insbesondere die gesamte kinetische Energie, des Kraftfahrzeugs in andere Energieformen, zum Beispiel potenzielle Energie und/oder Wärmeenergie, umgewandelt, sodass hierüber eine Geschwindigkeitsreduktion bewirkt werden kann. Insbesondere bewirkt die Kollision, dass ein Impuls des Kraftfahrzeugs nach der Kollision geringer oder kleiner ist als vor der Kollision. Da hier davon ausgegangen wird, dass sich die Masse des Kraftfahrzeugs durch die Kollision nicht oder nicht wesentlich ändern wird, ist über die Impulsreduktion eine Geschwindigkeitsreduktion bewirkt. Ein Kollisionsobjekt wird also für eine Umgebung der Rampe wie ein an einem Kraftfahrzeug angebrachten Kuhfänger, der auch als ein Frontschutzbügel bezeichnet wird.

Dadurch wird also insbesondere der technische Vorteil bewirkt, dass eine Geschwindigkeit des Kraftfahrzeugs effizient reduziert werden kann, wenn sich das Kraftfahrzeug noch auf der Rampe befindet. Wenn es also die Rampe verlassen sollte, nachdem die Geschwindigkeit erfindungsgemäß durch eine Kollision reduziert wurde, so wird es dies mit einer reduzierten Geschwindigkeit tun, sodass eine eventuelle weitere Kollision mit anderen Objekten, zum Beispiel weiteren Kraftfahrzeugen, Personen, Infrastrukturelementen, zum Beispiel Wände oder Pfeiler, bei einer geringeren Geschwindigkeit passieren würde. Dadurch kann zum Beispiel eine Unfallschwere verringert werden.

Sofern das Kraftfahrzeug noch auf der Rampe angehalten werden kann, das heißt also, dass die Geschwindigkeit auf 0 m/s reduziert ist, so wird das Kraftfahrzeug die Rampe noch nicht einmal verlassen und insofern auch keine Gefährdung für Objekte darstellen, die sich im Umfeld der Rampe, aber außerhalb der Rampe befinden.

Alles in allem kann dadurch insbesondere der technische Vorteil bewirkt werden, dass eine Bewegung des Kraftfahrzeugs auf einer schrägen Rampe effizient abgesichert werden kann. Dies insbesondere durch die Reduktion der Geschwindigkeit des Kraftfahrzeugs.

Dadurch, dass aufgrund der Kollision die Geschwindigkeit des Kraftfahrzeugs noch auf der Rampe reduziert werden kann, wird insbesondere der technische Vorteil bewirkt, dass zum Beispiel bei einem Versagen eines Bremssystems des Kraftfahrzeugs dieses noch gebremst werden kann. Insbesondere kann zum Beispiel ein Kraftfahrzeug effizient mittels der Kollision gebremst werden, welches sich unbeaufsichtigt von seinem Nutzer fort- und auf die Rampe bewegt hat, weil der Nutzer zum Beispiel keine Handbremse angezogen oder aktiviert hat.

Ein Reduzieren der Geschwindigkeit des Kraftfahrzeugs umfasst insbesondere ein Reduzieren auf 0 m/s, also ein Anhalten des Kraftfahrzeugs.

Eine schräge Rampe im Sinne der vorliegenden Erfindung bezeichnet insbesondere eine Rampe, die zwei Ebenen miteinander verbindet, die sich beabstandet voneinander befinden, also insbesondere unterschiedlich hoch bezogen auf einen Referenzpunkt angeordnet sind. Die Ebenen sind zum Beispiel Geschosse eines Parkplatzes. Der Referenzpunkt ist zum Beispiel der Erdboden.

Die schräge Rampe bildet also eine schiefe Ebene und kann als solche bezeichnet werden.

Das heißt also, dass die Rampe nach einer Ausführungsform ein erstes Geschoss eines Parkplatzes mit einem zweiten Geschoss des Parkplatzes verbindet.

Abschüssig vom Kraftfahrzeug bezeichnet insbesondere den Bereich der Rampe, der bezogen auf das Kraftfahrzeug in abschüssiger Richtung liegt.

Die Bewegung des Kraftfahrzeugs umfasst insbesondere eine führerlose Fahrt des Kraftfahrzeugs. Das heißt also, dass das Kraftfahrzeug im Rahmen der Bewegung auf der schrägen Rampe fahrer- oder führerlos fährt. Ein solch fahrer- oder führerloses Fahren des Kraftfahrzeugs umfasst insbesondere, dass das Kraftfahrzeug ferngesteuert wird oder dass das Kraftfahrzeug autonom, also selbstständig, fährt. Zum Beispiel ist vorgesehen, dass das Kraftfahrzeug einen Teil der Rampe autonom abfährt und einen weiteren Teil der Rampe ferngesteuert abfährt.

Nach einer Ausführungsform ist vorgesehen, dass das oder die mehreren Kollisionsobjekte ein oder mehrere Elemente ausgewählt aus der folgenden Gruppe von Kollisionsobjekten umfassen: Schranke, Pfeiler, Fangnetz, Fangseil.

Die vorstehend bezeichneten Beispiele für mögliche Kollisionsobjekte, wie sie im Rahmen der vorliegenden Erfindung verwendet werden, sind besonders geeignete Objekte (zum Beispiel aufgrund ihrer Größer und/oder ihres Materials), um eine Kollision mit dem Kraftfahrzeug herbeizuführen oder zu bewirken. So ist zum Beispiel eine Schranke in der Regel ausreichend breit, um den gesamten Fahrweg abzudecken, sodass das Kraftfahrzeug bei seiner abschüssigen Bewegung auf jeden Fall mit der Schranke kollidieren wird. Pfeiler sind in der Regel massive Infrastrukturelemente, sodass diese bei einer Kollision eine effiziente Geschwindigkeitsreduktion bewirken können. Ein Fangnetz und ein Fangseil sind besonders effiziente Mittel, um eine Geschwindigkeit eines Kraftfahrzeugs noch auf der Rampe zu reduzieren. Insbesondere können diese Mittel in vorteilhafter Weise die Geschwindigkeit reduzieren, ohne dass zugleich eine vergleichbare Bestätigung am Kraftfahrzeug erzeugt wird verglichen mit einer Schranke oder einem Pfeiler. Darüber hinaus können Fangnetze oder Fangseile effizient verstaut werden, bevor sie zum Einsatz kommen.

Nach einer Ausführungsform ist vorgesehen, dass die Schranke von oben oder von unten oder seitlich in den Fahrweg bewegt wird.

Dadurch wird insbesondere der technische Vorteil bewirkt, dass die Schranke effizient in den Fahrweg bewegt werden kann abhängig vom konkret vorliegenden Einzelfall. Somit können also bauliche Nebenbedingungen oder Randbedingungen in vorteilhafter Weise berücksichtigt werden.

Nach einer Ausführungsform ist vorgesehen, dass der Pfeiler aus einem Boden in den Fahrweg bewegt wird.

Das heißt also, dass der Pfeiler zum Beispiel im Boden versenkt angeordnet ist und erst für die Kollision aus dem Boden in den Fahrweg bewegt wird. Das heißt also, dass der Pfeiler normalerweise für Kraftfahrzeuge, die auf der Rampe fahren, kein Hindernis darstellt.

Nach einer Ausführungsform ist vorgesehen, dass das oder die mehreren Kollisionsobjekte von oben oder von unten oder seitlich in den Fahrweg bewegt werden.

Nach einer Ausführungsform ist vorgesehen, dass das oder die mehreren Kollisionsobjekte aus einem Boden in den Fahrweg bewegt werden.

Der Boden ist zum Beispiel der Boden der Rampe, wobei hier der Boden dann auch als Fahrbahn bezeichnet werden kann.

Der Boden ist zum Beispiel ein Boden eines Bereichs, der unmittelbar an die Rampe angrenzend angeordnet ist, zum Beispiel eine Schwelle vor der Rampe.

Beispielhaft ist bei mehreren Kollisionsobjekten vorgesehen, dass diese sowohl von oben und/oder von unten und/oder seitlich und/oder aus einem Boden in den Fahrweg bewegt werden.

Nach einer Ausführungsform ist vorgesehen, dass über ein Kommunikationsnetzwerk ein vom Kraftfahrzeug ausgesendetes Aktivierungssignal zum Aktivieren einer Bewegungseinrichtung zum Bewegen des oder der mehreren Kollisionsobjekte in den Fahrweg des Kraftfahrzeugs empfangen wird, wobei die Bewegungseinrichtung ansprechend auf das empfangene Aktivierungssignal aktiviert wird, um das oder die mehreren Kollisionsobjekte in den Fahrweg zu bewegen.

Dadurch wird insbesondere der technische Vorteil bewirkt, dass effizient sichergestellt werden kann, dass die Kollisionsobjekte auch rechtzeitig in den Fahrweg bewegt werden. Dies dadurch, dass hier das Kraftfahrzeug selbst das Bewegen der Kollisionsobjekte auslöst über die Aktivierung der Bewegungseinrichtung. Denn in der Regel weiß das Kraftfahrzeug aufgrund interner Diagnosen der einzelnen Kraftfahrzeugsysteme am besten Bescheid darüber, ob eine Geschwindigkeitsreduktion über eine Kollision mit einem oder mehreren Kollisionsobjekten notwendig ist. Dies ist zum Beispiel dann notwendig, wenn ein Bremssystem und/oder ein Bordnetz und/oder eine oder mehrere Komponenten des Bordnetzes des Kraftfahrzeugs ausgefallen sind. Denn dann ist eine Kollision zur Geschwindigkeitsreduktion noch auf der Rampe das kleinere Übel im Vergleich zu dem Fall, in welchem das Kraftfahrzeug zum Beispiel ungebremst nach Verlassen der Rampe mit weiteren Objekten kollidieren würde.

Erfindungsgemäß ist vorgesehen, dass über ein Kommunikationsnetzwerk eine vom Kraftfahrzeug ausgesendete Fehlermeldung empfangen wird, wobei das oder die mehreren Kollisionsobjekte ansprechend auf die empfangene Fehlermeldung in den Fahrweg bewegt werden.

Dadurch wird insbesondere der technische Vorteil bewirkt, dass effizient auf einen Fehler, der im Betrieb des Kraftfahrzeugs aufgetreten ist, reagiert werden kann, um eine Kollision des Kraftfahrzeugs mit weiteren Objekten zu verhindern. Insbesondere kann so in vorteilhafter Weise sichergestellt werden, dass die Kollisionsobjekte nur bei Bedarf in den Fahrweg bewegt werden.

Ein Kommunikationsnetzwerk umfasst nach einer Ausführungsform ein WLAN-Kommunikationsnetzwerk und/oder ein Mobilfunkkommunikationsnetzwerk und/oder ein Kommunikationsnetzwerk nach dem LoRa-Standard. "LoRa" steht für "Low-Power Wide-Range Communication".

In einem Beispiel, das nicht Teil der Erfindung ist, wird respektive ist eine Kommunikation über das Kommunikationsnetzwerk verschlüsselt.

Nach einer Ausführungsform ist vorgesehen, dass nach dem Bewegen des oder der mehreren Kollisionsobjekte in den Fahrweg das oder die mehreren Kollisionsobjekte erst dann wieder aus dem Fahrweg herausbewegt werden, um den Fahrweg frei zu geben, wenn ein Prüfen ergeben hat, dass eine unkontrollierte abschüssige Bewegung des Kraftfahrzeugs auf dem Fahrweg ausgeschlossen werden kann.

Dadurch wird insbesondere der technische Vorteil bewirkt, dass eine Sicherheit noch weiter effizient erhöht werden kann, insofern nun unabhängig davon, ob eine Fehlermeldung oder ein Aktivierungssignal vorliegt, die mehreren Kollisionsobjekte sich bereits im Fahrweg befinden. Der Fahrweg wird nach dieser Ausführungsform erst dann wieder freigegeben, wenn ein Prüfen ergeben hat, dass eine unkontrollierte abschüssige Bewegung des Kraftfahrzeugs auf dem Fahrweg ausgeschlossen werden kann.

Eine unkontrollierte abschüssige Bewegung des Kraftfahrzeugs bezeichnet insbesondere eine ungebremste abschüssige Bewegung des Kraftfahrzeugs auf dem Fahrweg. Unkontrolliert heißt insbesondere, dass das Kraftfahrzeug zum Beispiel eine Geschwindigkeit aufweist, die höher ist als ein vorbestimmter Geschwindigkeitsschwellwert.

Nach einer Ausführungsform ist vorgesehen, dass das Prüfen umfasst, dass geprüft wird, ob das Kraftfahrzeug vor dem oder den mehreren Kollisionsobjekten anhält, wobei eine unkontrollierte abschüssige Bewegung des Kraftfahrzeugs ausgeschlossen wird, wenn das Prüfen ergeben hat, dass das Kraftfahrzeug vor dem oder den mehreren Kollisionsobjekten anhält.

Dadurch wird insbesondere der technische Vorteil bewirkt, dass effizient festgestellt werden kann, ob eine unkontrollierte abschüssige Bewegung vorliegt oder nicht. Dies über das Kriterium, ob das Kraftfahrzeug vor dem oder den mehreren Kollisionsobjekten angehalten hat oder nicht. Insofern das Kraftfahrzeug rechtzeitig vor den Kollisionsobjekten anhält, führt es eine kontrollierte Bewegung aus, es insofern noch rechtzeitig angehalten hat.

Sofern im Rahmen dieser Beschreibung die Kollisionsobjekte im Plural stehen, so soll stets der Singular mitgelesen werden und umgekehrt.

Fahrzeuge im Sinne der vorliegenden Erfindung sind Kraftfahrzeuge.

Nach einer Ausführungsform ist vorgesehen, dass eine Bewegung des Kraftfahrzeugs auf der Rampe mittels einer Überwachungseinrichtung überwacht wird, wobei das oder die mehreren Kollisionsobjekte abhängig von der Überwachung in den Fahrweg bewegt werden.

Dadurch wird insbesondere der technische Vorteil bewirkt, dass effizient entschieden werden kann, ob die Objekte in den Fahrweg bewegt werden sollen oder nicht. Dies also basierend auf der Überwachung, die mittels der Überwachungseinrichtung ausgeführt wird.

Eine Überwachungseinrichtung im Sinne der vorliegenden Erfindung umfasst beispielsweise einen oder mehrere Umfeldsensoren. Ein Umfeldsensor ist zum Beispiel einer der folgenden Umfeldsensoren: Radarsensor, Lidarsensor, Lasersensor, Videosensor, Ultraschallsensor, Magnetsensor, Lichtschrankensensor und Infrarotsensor.

Eine Überwachungseinrichtung im Sinne der vorliegenden Erfindung ist insbesondere getrennt vom Kraftfahrzeug vorgesehen, also ist die Überwachungseinrichtung insbesondere eine kraftfahrzeugexterne Überwachungseinrichtung. Die Überwachungseinrichtung ist zum Beispiel innerhalb eines Parkplatzes an Infrastrukturelementen des Parkplatzes angeordnet.

Die Überwachungseinrichtung erfasst also zum Beispiel das Kraftfahrzeug und ermittelt basierend auf der Überwachung entsprechende Überwachungsdaten. Sofern die Überwachungseinrichtung einen oder mehrere Umfeldsensoren umfasst, werden also der Überwachung entsprechende Umfelddaten ermittelt. Die Überwachungsdaten, also insbesondere die Umfelddaten, werden auf eine unkontrollierte abschüssige Bewegung des Kraftfahrzeugs hin analysiert. Zum Beispiel wird eine Geschwindigkeit des Kraftfahrzeugs basierend auf den Überwachungsdaten ermittelt. Sofern die Geschwindigkeit des Kraftfahrzeugs über einem vorbestimmten Geschwindigkeitsschwellwert liegen sollte, werden die Kollisionsobjekte in den Fahrweg bewegt.

Die Analyse der Überwachungsdaten umfasst zum Beispiel eine Prädiktion einer Bewegung des Kraftfahrzeugs. Basierend auf der Prädiktion wird dann entschieden, ob die Kollisionsobjekte in den Fahrweg bewegt werden sollen oder nicht.

Nach einer Ausführungsform ist vorgesehen, dass die Vorrichtung zum Absichern einer Bewegung eines Kraftfahrzeugs auf einer schrägen Rampe ausgebildet oder eingerichtet ist, das Verfahren zum Absichern einer Bewegung eines Kraftfahrzeugs auf einer schrägen Rampe aus- oder durchzuführen.

Technische Funktionalitäten der Vorrichtung ergeben sich aus entsprechenden technischen Funktionalitäten des Verfahrens und umgekehrt.

Nach einer Ausführungsform der Vorrichtung ist vorgesehen, dass das oder die mehreren Kollisionsobjekte ein oder mehrere Elemente ausgewählt aus der folgenden Gruppe von Kollisionsobjekten umfassen: Schranke, Pfeiler, Fangnetz, Fangseil.

Nach einer Ausführungsform ist vorgesehen, dass die Bewegungseinrichtung ausgebildet ist, die Schranke von oben oder von unten oder seitlich in den Fahrweg zu bewegen.

Nach einer weiteren Ausführungsform ist vorgesehen, dass die Bewegungseinrichtung ausgebildet ist, den Pfeiler aus einem Boden in den Fahrweg zu bewegen.

Gemäß einer weiteren Ausführungsform ist vorgesehen, dass eine Kommunikationsschnittstelle vorgesehen ist, die ausgebildet ist, über ein Kommunikationsnetzwerk ein vom Kraftfahrzeug ausgesendetes Aktivierungssignal zum Aktivieren der Bewegungseinrichtung zum Bewegen des oder der mehreren Kollisionsobjekte in den Fahrweg des Kraftfahrzeugs zu empfangen, wobei die Bewegungseinrichtung ausgebildet ist, ansprechend auf das empfangene Aktivierungssignal das oder die mehreren Kollisionsobjekte in den Fahrweg zu bewegen.

Erfindungsgemäß ist vorgesehen, dass eine Kommunikationsschnittstelle vorgesehen ist, die ausgebildet ist, über ein Kommunikationsnetzwerk eine vom Kraftfahrzeug ausgesendete Fehlermeldung zu empfangen, wobei die Bewegungseinrichtung ausgebildet ist, ansprechend auf die empfangene Fehlermeldung das oder die mehreren Kollisionsobjekte in den Fahrweg zu bewegen.

Nach einer weiteren Ausführungsform ist vorgesehen, dass eine Prüfeinrichtung vorgesehen ist, die ausgebildet ist, zu prüfen, ob eine unkontrollierte abschüssige Bewegung des Kraftfahrzeugs auf dem Fahrweg ausgeschlossen werden kann, wobei die Bewegungseinrichtung ausgebildet ist, nach dem Bewegen des oder der mehreren Kollisionsobjekte in den Fahrweg das oder die mehreren Kollisionsobjekte erst dann wieder aus dem Fahrweg herauszubewegen, um den Fahrweg frei zu geben, wenn das Prüfen ergeben hat, dass eine unkontrollierte abschüssige Bewegung des Kraftfahrzeugs auf dem Fahrweg ausgeschlossen werden kann.

Nach einer weiteren Ausführungsform ist vorgesehen, dass die Prüfeinrichtung ausgebildet ist, zu prüfen, ob das Kraftfahrzeug vor dem oder den mehreren Kollisionsobjekten anhält, wobei die Prüfeinrichtung ausgebildet ist, eine unkontrollierte abschüssige Bewegung des Kraftfahrzeugs auf dem Fahrweg auszuschließen, wenn das Prüfen ergeben hat, dass das Kraftfahrzeug vor dem oder den mehreren Kollisionsobjekten anhält.

Nach einer weiteren Ausführungsform ist vorgesehen, dass eine Überwachungseinrichtung vorgesehen ist, die ausgebildet ist, eine Bewegung des Kraftfahrzeugs auf der Rampe zu überwachen, wobei die Bewegungseinrichtung ausgebildet ist, das oder die mehreren Objekte abhängig von der Überwachung in den Fahrweg zu bewegen.

Nach einer Ausführungsform ist vorgesehen, dass eine Bewegungseinrichtung vorgesehen ist, die ausgebildet ist, das oder die mehreren Kollisionsobjekte in den Fahrweg zu bewegen.

Nach einer Ausführungsform ist eine Überwachungseinrichtung vorgesehen, die ausgebildet ist, eine Bewegung des Kraftfahrzeugs auf der Rampe zu überwachen.

Nach einer Ausführungsform umfasst die Vorrichtung eine Überwachungseinrichtung.

Bei der Überwachungseinrichtung des Parkplatzes respektive der Vorrichtung handelt es sich zum Beispiel um die vorstehend bezeichnete Überwachungseinrichtung.

Die Formulierung "respektive" umfasst insbesondere die Formulierung "und/oder".

Ein Parkplatz im Sinne der vorliegenden Erfindung bezeichnet insbesondere eine Parkfläche und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist beispielsweise als ein Parkhaus ausgebildet. Der Parkplatz ist beispielsweise als eine Parkgarage ausgebildet.

Der Parkplatz umfasst beispielsweise mehrere Geschosse, die jeweils über eine schräge Rampe verbunden sind. Eine Rampe im Sinne der vorliegenden Erfindung kann auch als eine schiefe Ebene bezeichnet werden.

Nach einem Beispiel, das nicht Teil der Erfindung ist, ist eine Steuerungseinrichtung vorgesehen, die ausgebildet ist, die Bewegungseinrichtung zu steuern. Das heißt also, dass die Steuerungseinrichtung ausgebildet ist, die Bewegungseinrichtung derart zu steuern, dass diese das oder die mehreren Kollisionsobjekte in den Fahrweg bewegt.

Nach einem weiteren Beispiel, das nicht Teil der Erfindung ist, umfasst die Bewegungseinrichtung einen Motor, zum Beispiel einen Antriebsmotor, um zum Beispiel ein Kollisionsobjekt in den Fahrweg zu bewegen. Zum Beispiel treibt ein Motor eine Schranke oder einen beweglich angeordneten Pfeiler derart an, dass diese respektive dieser in den Fahrweg bewegt werden können respektive werden.

Zum Beispiel umfasst ein Bewegen eines Fangnetzes respektive eines Fangseils in den Fahrweg, dass das Fangnetz respektive das Fangseil derart aufgespannt werden, dass sich das aufgespannte Fangnetz respektive das aufgespannte Fangseil im Fahrweg befinden.

Das Bewegen der Schranke in den Fahrweg umfasst insbesondere ein Schwenken der Schranke derart, dass diese in den Fahrweg geschwenkt wird.

Das Bewegen des Pfeilers umfasst insbesondere, dass dieser eine translatorische Bewegung durchführt in den Fahrweg hinein.

Die Erfindung wird im Folgenden anhand von bevorzugten Ausführungsbeispielen näher erläutert. Hierbei zeigen
Fig. 1 ein Ablaufdiagramm eines Verfahrens zum Absichern einer Bewegung eines Kraftfahrzeugs auf einer schrägen Rampe,
Fig. 2 ein Ablaufdiagramm eines weiteren Verfahrens zum Absichern einer Bewegung eines Kraftfahrzeugs auf einer schrägen Rampe,
Fig. 3 ein Ablaufdiagramm eines anderen Verfahrens zum Absichern einer Bewegung eines Kraftfahrzeugs auf einer schrägen Rampe,
Fig. 4 eine Vorrichtung zum Absichern einer Bewegung eines Kraftfahrzeugs auf einer schrägen Rampe und
Fig. 5 einen Parkplatz.

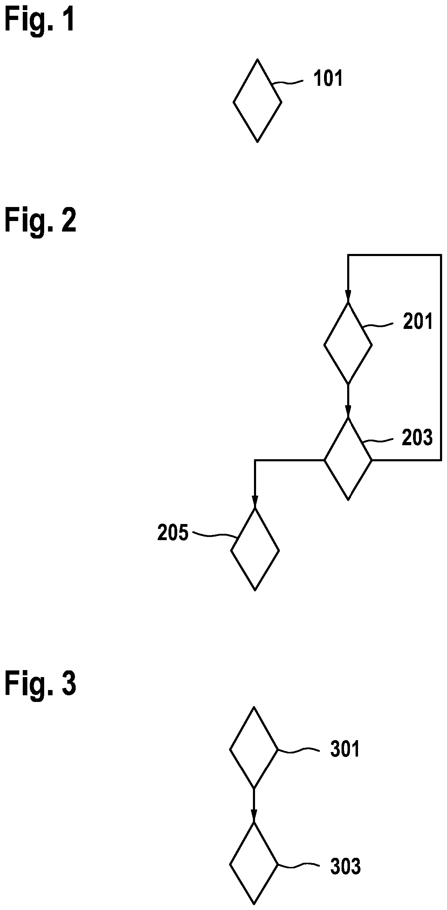

Fig. 1 zeigt ein Ablaufdiagramm eines Verfahrens zum Absichern einer Bewegung eines Kraftfahrzeugs auf einer schrägen Rampe.

Gemäß einem Schritt 101 werden abschüssig vom Kraftfahrzeug ein oder mehrere Kollisionsobjekte in einen durch die Rampe vorgegebenen Fahrweg bewegt, um im Fall einer abschüssigen Bewegung des Kraftfahrzeugs auf dem Fahrweg durch eine Kollision des einen oder der mehreren Kollisionsobjekte mit dem Kraftfahrzeug eine Geschwindigkeit des Kraftfahrzeugs noch auf der Rampe zu reduzieren.

Fig. 2 zeigt ein Ablaufdiagramm eines weiteren Verfahrens zum Absichern einer Bewegung eines Kraftfahrzeugs auf einer schrägen Rampe.

In einem Schritt 201 wird eine Fahrt des Kraftfahrzeugs auf der schrägen Rampe mittels einer Überwachungseinrichtung überwacht, um der Überwachung entsprechende Überwachungsdaten zu ermitteln. Die ermittelten Überwachungsdaten werden in einem Schritt 203 dahingehend analysiert, um zu entscheiden oder zu bestimmen, ob ein oder mehrere Kollisionsobjekte in einen durch die Rampe vorgegebenen Fahrweg bewegt werden müssen, um im Fall einer abschüssigen Bewegung des Kraftfahrzeugs auf dem Fahrweg durch eine Kollision des einen oder der mehreren Kollisionsobjekte mit dem Kraftfahrzeug eine Geschwindigkeit des Kraftfahrzeugs noch auf der Rampe zu reduzieren.

Zum Beispiel ist im Schritt 203 eine Prädiktion einer Bewegung des Kraftfahrzeugs auf der Rampe vorgesehen. Zum Beispiel ist im Schritt 203 vorgesehen, dass eine momentane Kraftfahrzeuggeschwindigkeit ermittelt und mit einem vorgegebenen Geschwindigkeitsschwellwert verglichen wird. Sofern die ermittelte momentane Kraftfahrzeuggeschwindigkeit größer als der Geschwindigkeitsschwellwert ist, so wird entschieden, dass ein oder mehrere Kollisionsobjekte in den Fahrweg bewegt werden müssen.

Das Verfahren wird im Schritt 205 fortgesetzt, sofern im Schritt 203 entschieden wurde oder bestimmt wurde, dass ein oder mehrere Kollisionsobjekte in den Fahrweg bewegt werden müssen. Das heißt, dass im Schritt 205 ein oder mehrere Kollisionsobjekte in den Fahrweg bewegt werden.

Das Bewegen gemäß dem Schritt 205 umfasst zum Beispiel ein Schließen einer Schranke. Das Bewegen im Schritt 205 umfasst zum Beispiel, dass ein Pfeiler aus einem Boden, zum Beispiel einem Boden der Rampe, in den Fahrweg bewegt wird. Zum Beispiel umfasst das Bewegen im Schritt 205, dass ein Fangnetz respektive ein Fangseil gespannt wird, um das Kraftfahrzeug aufzufangen.

Sofern im Schritt 203 bestimmt oder entschieden wurde, dass kein Kollisionsobjekt in den Fahrweg bewegt werden muss, so wird das Verfahren wieder am Schritt 201 fortgesetzt. Das Verfahren wird zum Beispiel so lange kontinuierlich wiederholt, bis das Kraftfahrzeug die Rampe verlassen hat.

Fig. 3 zeigt ein Ablaufdiagramm eines anderen Verfahrens zum Absichern einer Bewegung eines Kraftfahrzeugs auf einer schrägen Rampe.

In einem Schritt 301 wird über ein Kommunikationsnetzwerk eine vom Kraftfahrzeug ausgesendete Fehlermeldung empfangen. Die Fehlermeldung sagt zum Beispiel aus, dass ein Bremssystem des Kraftfahrzeugs ausgefallen ist oder eine Fehlfunktion aufweist. Die Fehlermeldung gibt zum Beispiel an, dass ein Bordnetz des Kraftfahrzeugs ausgefallen ist oder eine Fehlfunktion aufweist.

Ansprechend auf die empfangene Fehlermeldung wird respektive werden gemäß einem Schritt 303 ein oder mehrere Kollisionsobjekte in den Fahrweg, der durch die Rampe vorgegeben ist, bewegt, um im Fall einer abschüssigen Bewegung des Kraftfahrzeugs auf dem Fahrweg durch eine Kollision des einen oder der mehreren Kollisionsobjekte mit dem Kraftfahrzeug eine Geschwindigkeit des Kraftfahrzeugs noch auf der Rampe zu reduzieren.

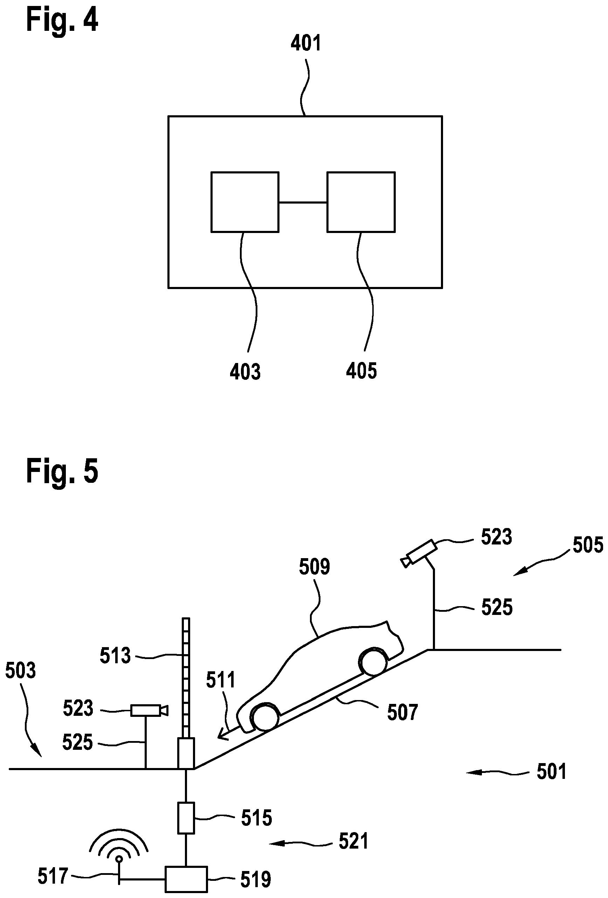

Fig. 4 zeigt eine Vorrichtung 401 zum Absichern einer Bewegung eines Kraftfahrzeugs auf einer schrägen Rampe in schematischer Form.

Die Vorrichtung 401 umfasst ein Kollisionsobjekt 403. In einer nicht gezeigten Ausführungsform sind mehrere Kollisionsobjekte 403 vorgesehen. Diese sind identisch oder unterschiedlich ausgebildet.

Die Vorrichtung 401 umfasst ferner eine Bewegungseinrichtung 405, die ausgebildet ist, das Kollisionsobjekt 403 in einen durch die Rampe vorgegebenen Fahrweg abschüssig vom Kraftfahrzeug zu bewegen, um im Fall einer abschüssigen Bewegung des Kraftfahrzeugs auf dem Fahrweg durch eine Kollision des Kollisionsobjekts 403 mit dem Kraftfahrzeug eine Geschwindigkeit des Kraftfahrzeugs noch auf der Rampe reduzieren zu können.

Die Bewegungseinrichtung 405 umfasst zum Beispiel einen Antriebsmotor zum Antreiben oder Bewegen einer Schranke respektive eines Pfeilers. Die Vorrichtung 401 umfasst zum Beispiel eine Steuerungseinrichtung zum Steuern der Bewegungseinrichtung 405, insbesondere zum Steuern des Antriebsmotors.

Die Vorrichtung 401 umfasst eine Kommunikationsschnittstelle zum Empfangen einer Fehlermeldung respektive eines Aktivierungssignals über ein Kommunikationsnetzwerk.

Fig. 5 zeigt einen Parkplatz 501.

Der Parkplatz 501 umfasst ein erstes Geschoss 503 und ein zweites Geschoss 505, welches oberhalb des ersten Geschosses 503 liegt. Eine schräge Rampe 507, auch eine schiefe Ebene genannt, verbindet die beiden Geschosse 503, 505.

Ein Kraftfahrzeug 509 fährt vom zweiten Geschoss 505 über die Rampe 507 in das erste Geschoss 503. Das Kraftfahrzeug 509 befindet sich noch auf der

Rampe 507. Eine Fahrtrichtung des Kraftfahrzeugs 509 ist mit dem Pfeil mit dem Bezugszeichen 511 bezeichnet. Die Fahrtrichtung 511 ist insbesondere durch die Rampe 507 vorgegeben, die insofern einen Fahrweg für das Kraftfahrzeug 509 festlegt.

Abschüssig vom Kraftfahrzeug 509 ist eine Schranke 513 vorgesehen, die noch hochgeklappt ist. Die Schranke 513 kann mittels eines Antriebsmotors 515 von der hochgeklappten Position in eine heruntergeklappte Position bewegt werden oder verschwenkt werden, in welcher die Schranke 513 mit dem Kraftfahrzeug 509 kollidieren würde, wenn das Kraftfahrzeug 509 die Rampe 507 bis zum Ende und weiter darüber hinaus fahren würde.

Im zweiten Geschoss 505 am Beginn der Rampe 507 sowie im ersten Geschoss 503 in unmittelbarer Nähe der Rampe 507 ist jeweils eine Videokamera 523 auf einem Pfahl 525 angeordnet. Die Videokameras 523 erfassen die Rampe 507 und können somit eine Fahrt des Kraftfahrzeugs 509 auf der Rampe 507 überwachen. Basierend auf der Überwachung kann zum Beispiel bestimmt werden, ob die Schranke 513 heruntergeklappt oder geschlossen werden muss.

Für diese Entscheidung ist zum Beispiel eine Steuerungseinrichtung 519 vorgesehen, die mit den beiden Videokameras 523 kommunikationstechnisch in Verbindung steht, das heißt, dass eine Kommunikationsverbindung zwischen den Videokameras 523 und der Steuerungseinrichtung 519 gebildet ist. Die Kommunikationsverbindung ist zum Beispiel eine drahtlose respektive drahtgebundene Kommunikationsverbindung.

Sofern die Steuerungseinrichtung 519 basierend auf den Überwachungsdaten entschieden hat, dass die Schranke 513 geschlossen werden muss, steuert sie den Antriebsmotor 515 derart an, dass dieser die Schranke 513 schließt. Das Kraftfahrzeug 509 wird dann mit der heruntergeklappten Schranke 513 kollidieren, wodurch sich in vorteilhafter Weise eine Geschwindigkeit des Kraftfahrzeugs noch auf der Rampe reduziert. Das Reduzieren umfasst insbesondere ein Anhalten oder ein Bremsen des Kraftfahrzeugs 509 bis zum Stillstand. Dadurch wird also in vorteilhafter Weise vermieden, dass das Kraftfahrzeug 509 ungebremst mit Objekten, die sich innerhalb des ersten Geschosses 503 befinden, kollidiert.

Ferner ist eine Kommunikationsschnittstelle 517 vorgesehen, die ausgebildet ist, über ein drahtloses Kommunikationsnetzwerk zu kommunizieren. Die Kommunikationsschnittstelle 517 ist ausgebildet, eine Fehlermeldung respektive ein Aktivierungssignal zu empfangen, welches vom Kraftfahrzeug 509 über ein drahtloses Kommunikationsnetzwerk (zum Bespiel WLAN- und/oder Mobilfunk- und/oder LoRa-Kommunikationsnetzwerk) ausgesendet wurde. Ansprechend auf das Aktivierungssignal respektive die Fehlermeldung wird dann zum Beispiel die Schranke 513 geschlossen. Das heißt also, dass zum Beispiel das Aktivierungssignal direkt der Steuerungseinrichtung 519 signalisiert, dass diese den Antriebsmotor 515 derart steuern soll, dass dieser die Schranke 513 herunterschwenkt.

Hierfür ist zum Beispiel vorgesehen, dass das Kraftfahrzeug 509 eine hier nicht gezeigte Kommunikationsschnittstelle zur Kommunikation über ein drahtloses Kommunikationsnetzwerk umfasst.

Somit ist eine Vorrichtung 521 zum Absichern einer Bewegung eines Kraftfahrzeugs auf einer schrägen Rampe bereitgestellt, wobei die Vorrichtung 521 die Schranke 513, den Antriebsmotor 515, die Steuerungseinrichtung 519 und die Kommunikationsschnittstelle 517 umfasst.

Die Erfindung umfasst also insbesondere und unter anderem den Gedanken, ein effizientes technisches Konzept bereitzustellen, welches effizient eine Fahrt oder Bewegung eines Kraftfahrzeugs auf einer schrägen Rampe absichern kann. Insbesondere wird dadurch bewirkt, dass ein Fehler respektive ein Ausfall im respektive des Bordnetzes und/oder des Bremssystems des Kraftfahrzeugs nicht zu einer Kollision mit weiteren Objekten führt respektive wird bewirkt, dass im Fall einer Kollision eine Unfallschwere verringert. Der erfindungsgemäße Grundgedanke ist insbesondere darin zu sehen, dass das Kraftfahrzeug noch auf der Rampe durch ein oder mehrere Kollisionsobjekte gebremst oder sogar angehalten wird.

Ein Kollisionsobjekt ist zum Beispiel eine Schranke, die von der Seite oder von oben oder von unten in den Fahrweg des Kraftfahrzeugs bewegt wird.

In einer weiteren Ausführungsform ist ein Kollisionsobjekt ein Pfeiler, der aus einem Boden bewegt wird hinein in den Fahrweg. Insbesondere sind mehrere Pfeiler vorgesehen.

In einer Ausführungsform ist ein Kollisionsobjekt ein Fangnetz oder ein Fangseil.

In einem Beispiel, das nicht Teil der Erfindung ist, ist das Kollisionsobjekt derart ausgebildet, dass bei einer Kollision kein Schaden am Kraftfahrzeug entsteht. Zum Beispiel ist das Fangnetz respektive das Fangseil aus einem elastischen Material.

Ein Kriterium, dass das oder die Kollisionsobjekte in den Fahrweg bewegt werden sollen, ist insbesondere dann erfüllt, wenn festgestellt wird, dass das Kraftfahrzeug ungebremst die Rampe hinunterfährt respektive sich ungebremst die Rampe herunterbewegt. Dieses Erkennen, dass das Kraftfahrzeug ungebremst die Rampe herunterfährt, wird nach einer Ausführungsform vom Kraftfahrzeug selbst bewirkt. Gemäß dieser Ausführungsform sendet dann das Kraftfahrzeug direkt ein Aktivierungssignal zum Aktivieren der Bewegungseinrichtung. Dies ist insbesondere dann noch möglich, wenn lediglich ein Bremssystem ausgefallen ist, wohingegen ein Bordnetz und hier eine Kommunikationseinheit weiterhin funktionieren.

Erfindungsgemäß ist vorgesehen, dass das Kraftfahrzeug diese Erkenntnis, dass das Bewegen der Kollisionsobjekte in den Fahrweg notwendig ist, als eine entsprechende Fehlermeldung an die Vorrichtung zum Absichern einer Bewegung eines Kraftfahrzeugs auf einer schrägen Rampe über ein Kommunikationsnetzwerk sendet, sodass diese dann die Kollisionsobjekte in den Fahrweg bewegt. Die Vorrichtung ist nach einer Ausführungsform von einem Parkplatzverwaltungssystem umfasst. Ein Parkplatzverwaltungssystem steuert respektive koordiniert insbesondere einen Betrieb des Parkplatzes.

Nach einem Beispiel, das nicht Teil der Erfindung ist, überwacht respektive detektiert das Parkplatzverwaltungssystem die Situation, also die Fahrt des Kraftfahrzeugs auf der Rampe. Dies insbesondere mittels einer Überwachungseinrichtung, die zum Beispiel von einem Überwachungssystem umfasst sein kann, wobei das Parkplatzverwaltungssystem die Bewegungseinrichtung aktiviert, um die Kollisionsobjekte in den Fahrweg zu bewegen.

Das heißt also, dass nach einer Ausführungsform eine kraftfahrzeugexterne Überwachung der Fahrt des Kraftfahrzeugs auf der schrägen Rampe vorgesehen ist, wobei basierend auf der Überwachung entschieden wird, ob ein oder mehrere Kollisionsobjekte in den Fahrweg bewegt werden müssen.

Nach einer Ausführungsform sind die Kollisionsobjekte bereits im Fahrweg bewegt worden, befinden sich also innerhalb des Fahrwegs. Dies insbesondere solange sich das Kraftfahrzeug auf der Rampe bewegt. Die Kollisionsobjekte werden erst dann aus dem Fahrweg herausbewegt, sobald sicher ist, dass entweder ein Ausfall eines Bremssystems respektive eines Bordnetzes ausgeschlossen werden kann oder dass aus einem entsprechenden Ausfall kein Schaden mehr entstehen kann. Dass ein Ausfall des Bremssystems respektive des Bordnetzes ausgeschlossen werden kann, kann insbesondere dadurch bestimmt werden, dass geprüft wird, ob das Kraftfahrzeug vor den Kollisionsobjekten angehalten hat.

In einem Beispiel, das nicht Teil der Erfindung ist, ist die Vorrichtung zu Werbe- und Inszenierungszwecken entsprechend ausgestaltet. Das heißt zum Beispiel, dass die Vorrichtung zum Beispiel mit einem Firmenlogo versehen ist. Das heißt zum Beispiel, dass die Vorrichtung mit einem Anstrichmittel einer vorbestimmten Farbe versehen ist.

In einem weiteren Beispiel, das nicht Teil der Erfindung ist, wird ein respektive werden mehrere respektive werden alle Verfahrensschritte elektronisch gespeichert respektive dokumentiert. Dies bewirkt insbesondere den technischen Vorteil, dass auch zu einem späteren Zeitpunkt nachvollzogen werden kann, was wann wie genau passiert ist. Das elektronische Speichern und Dokumentieren dient also in vorteilhafter Weise zu Dokumentationszwecken.

## Patentansprüche

1. Verfahren zum Absichern einer Bewegung eines Kraftfahrzeugs (509) auf einer schrägen Rampe (507) eines Parkplatzes, wobei abschüssig vom Kraftfahrzeug (509) ein oder mehrere Kollisionsobjekte (403, 513) in einen durch die Rampe (507) vorgegebenen Fahrweg bewegt werden (101, 205, 303), um im Fall einer abschüssigen Bewegung des Kraftfahrzeugs (509) auf dem Fahrweg durch eine Kollision des einen oder der mehreren Kollisionsobjekte (403, 513) mit dem Kraftfahrzeug (509) eine Geschwindigkeit des Kraftfahrzeugs (509) noch auf der Rampe (507) zu reduzieren, **dadurch gekennzeichnet, dass** über ein Kommunikationsnetzwerk eine vom Kraftfahrzeug (509) ausgesendete Fehlermeldung von einer Kommunikationsschnittstelle empfangen (301) wird, wobei das oder die mehreren Kollisionsobjekte (403, 513) ansprechend auf die empfangene Fehlermeldung von einer Bewegungseinrichtung (405, 515) in den Fahrweg bewegt (303) werden.

2. Verfahren nach Anspruch 1, wobei das oder die mehreren Kollisionsobjekte (403, 513) ein oder mehrere Elemente ausgewählt aus der folgenden Gruppe von Kollisionsobjekten (403, 513) umfassen: Schranke (513), Pfeiler, Fangnetz, Fangseil.

3. Verfahren nach Anspruch 2, wobei die Schranke (513) von oben oder von unten oder seitlich in den Fahrweg bewegt wird.

4. Verfahren nach Anspruch 2 oder 3, wobei der Pfeiler aus einem Boden in den Fahrweg bewegt wird.

5. Verfahren nach einem der vorherigen Ansprüche, wobei über ein Kommunikationsnetzwerk ein vom Kraftfahrzeug (509) ausgesendetes Aktivierungssignal zum Aktivieren einer Bewegungseinrichtung (405, 515) zum Bewegen des oder der mehreren Kollisionsobjekte (403, 513) in den Fahrweg des Kraftfahrzeugs (509) empfangen wird, wobei die Bewegungseinrichtung (405, 515) ansprechend auf das empfangene Aktivierungssignal aktiviert wird, um das oder die mehreren Kollisionsobjekte (403, 513) in den Fahrweg zu bewegen.

6. Verfahren nach einem der vorherigen Ansprüche, wobei nach dem Bewegen des oder der mehreren Kollisionsobjekte (403, 513) in den Fahrweg das oder die mehreren Kollisionsobjekte (403, 513) erst dann wieder aus dem Fahrweg herausbewegt werden, um den Fahrweg frei zu geben, wenn ein Prüfen ergeben hat, dass eine unkontrollierte abschüssige Bewegung des Kraftfahrzeugs (509) auf dem Fahrweg ausgeschlossen werden kann.

7. Verfahren nach Anspruch 6, wobei das Prüfen umfasst, dass geprüft wird, ob das Kraftfahrzeug (509) vor dem oder den mehreren Kollisionsobjekten (403, 513) anhält, wobei eine unkontrollierte abschüssige Bewegung des Kraftfahrzeugs (509) ausgeschlossen wird, wenn das Prüfen ergeben hat, dass das Kraftfahrzeug (509) vor dem oder den mehreren Kollisionsobjekten (403, 513) anhält.

8. Verfahren nach einem der vorherigen Ansprüche, wobei eine Bewegung des Kraftfahrzeugs (509) auf der Rampe (507) mittels einer Überwachungseinrichtung (523) überwacht (201) wird, wobei das oder die mehreren Kollisionsobjekte (403, 513) abhängig von der Überwachung in den Fahrweg bewegt (205) werden.

9. Vorrichtung (401, 521) zum Absichern einer Bewegung eines Kraftfahrzeugs (509) auf einer schrägen Rampe (507) eines Parkplatzes, umfassend ein oder mehrere Kollisionsobjekte (403, 513) und eine Bewegungseinrichtung (405, 515) zum Bewegen des oder der mehreren Kollisionsobjekte (403, 513) in einen durch die Rampe (507) vorgegebenen Fahrweg abschüssig vom Kraftfahrzeug (509), um im Fall einer abschüssigen Bewegung des Kraftfahrzeugs (509) auf dem Fahrweg durch eine Kollision des einen oder der mehreren Kollisionsobjekte (403, 513) mit dem Kraftfahrzeug (509) eine Geschwindigkeit des Kraftfahrzeugs (509) noch auf der Rampe (507) reduzieren zu können, **dadurch gekennzeichnet, dass** eine Kommunikationsschnittstelle vorgesehen ist, die ausgebildet ist, über ein Kommunikationsnetzwerk eine vom Kraftfahrzeug (509) ausgesendete Fehlermeldung zu empfangen, wobei die Bewegungseinrichtung (405, 515) ausgebildet ist, ansprechend auf die empfangene Fehlermeldung das oder die mehreren Kollisionsobjekte (403, 513) in den Fahrweg zu bewegen.

10. Vorrichtung (401, 521) nach Anspruch 9, wobei das oder die mehreren Kollisionsobjekte (403, 513) ein oder mehrere Elemente ausgewählt aus der folgenden Gruppe von Kollisionsobjekten (403, 513) umfassen: Schranke (513), Pfeiler, Fangnetz, Fangseil.

11. Vorrichtung (401, 521) nach Anspruch 10, wobei die Bewegungseinrichtung (405, 515) ausgebildet ist, die Schranke (513) von oben oder von unten oder seitlich in den Fahrweg zu bewegen.

12. Vorrichtung (401, 521) nach Anspruch 10 oder 11, wobei die Bewegungseinrichtung (405, 515) ausgebildet ist, den Pfeiler aus einem Boden in den Fahrweg zu bewegen.

13. Vorrichtung (401, 521) nach einem der Ansprüche 9 bis 12, wobei eine Kommunikationsschnittstelle vorgesehen ist, die ausgebildet ist, über ein Kommunikationsnetzwerk ein vom Kraftfahrzeug (509) ausgesendetes Aktivierungssignal zum Aktivieren der Bewegungseinrichtung (405, 515) zum Bewegen des oder der mehreren Kollisionsobjekte (403, 513) in den Fahrweg des Kraftfahrzeugs (509) zu empfangen, wobei die Bewegungseinrichtung (405, 515) ausgebildet ist, ansprechend auf das empfangene Aktivierungssignal das oder die mehreren Kollisionsobjekte (403, 513) in den Fahrweg zu bewegen.

14. Vorrichtung (401, 521) nach einem der Ansprüche 9 bis 13, wobei eine Prüfeinrichtung vorgesehen ist, die ausgebildet ist, zu prüfen, ob eine unkontrollierte abschüssige Bewegung des Kraftfahrzeugs (509) auf dem Fahrweg ausgeschlossen werden kann, wobei die Bewegungseinrichtung (405, 515) ausgebildet ist, nach dem Bewegen des oder der mehreren Kollisionsobjekte (403, 513) in den Fahrweg das oder die mehreren Kollisionsobjekte (403, 513) erst dann wieder aus dem Fahrweg herauszubewegen, um den Fahrweg frei zu geben, wenn das Prüfen ergeben hat, dass eine unkontrollierte abschüssige Bewegung des Kraftfahrzeugs (509) auf dem Fahrweg ausgeschlossen werden kann.

15. Vorrichtung (401, 521) nach Anspruch 14, wobei die Prüfeinrichtung ausgebildet ist, zu prüfen, ob das Kraftfahrzeug (509) vor dem oder den mehreren Kollisionsobjekten (403, 513) anhält, wobei die Prüfeinrichtung ausgebildet ist, eine unkontrollierte abschüssige Bewegung des Kraftfahrzeugs (509) auf dem Fahrweg auszuschließen, wenn das Prüfen ergeben hat, dass das Kraftfahrzeug (509) vor dem oder den mehreren Kollisionsobjekten (403, 513) anhält.

16. Vorrichtung (401, 521) nach einem der Ansprüche 9 bis 15, wobei eine Überwachungseinrichtung (523) vorgesehen ist, die ausgebildet ist, eine Bewegung des Kraftfahrzeugs (509) auf der Rampe (507) zu überwachen, wobei die Bewegungseinrichtung (405, 515) ausgebildet ist, das oder die mehreren Objekte (403, 513) abhängig von der Überwachung in den Fahrweg zu bewegen.

17. Parkplatz (501), umfassend eine schräge Rampe (507) und die Vorrichtung (401, 521) nach einem der Ansprüche 9 bis 16.

18. Computerprogramm, umfassend Programmcode zur Durchführung des Verfahrens nach einem der Ansprüche 1 bis 8, wenn das Computerprogramm auf einem Computer ausgeführt wird.

## Claims

1. Method for protecting against movement of a motor vehicle (509) on an inclined ramp (507) in a parking space, wherein, sloping away from the motor vehicle (509), one or more collision objects (403, 513) are moved (101, 205, 303) into a route predefined by the ramp (507) in order to reduce a speed of the motor vehicle (509) still on the ramp (507) in the event of a rolling-away movement of the motor vehicle (509) on the route through collision between one or more collision objects (403, 513) and the motor vehicle (509), **characterized in that** a fault message transmitted by the motor vehicle (509) via a communication network is received by a communication interface (301), wherein the one or more collision objects (403, 513) are moved into the route (303) by a movement apparatus (405, 515) in response to the received fault message.

2. Method according to Claim 1, wherein the one or more collision objects (403, 513) comprise one or more elements selected from the following group of collision objects (403, 513): barrier (513), bollard, safety net, safety wire.

3. Method according to Claim 2, wherein the barrier (513) is moved into the route from above or from below or from the side.

4. Method according to Claim 2 or 3, wherein the bollard is moved into the route from the ground.

5. Method according to one of the preceding claims, wherein an activation signal, transmitted by the motor vehicle (509) via a communication network, for activating a movement apparatus (405, 515) so as to move the one or more collision objects (403, 513) into the route of the motor vehicle (509) is received, wherein the movement apparatus (405, 515) is activated in response to the received activation signal in order to move the one or more collision objects (403, 513) into the route.

6. Method according to one of the preceding claims, wherein, following the movement of the one or more collision objects (403, 513) into the route, the one or more collision objects (403, 513) are moved back out of the route so as to clear the route only when an inspection has revealed that an uncontrolled rolling-away movement of the motor vehicle (509) on the route is able to be ruled out.

7. Method according to Claim 6, wherein the inspection comprises checking whether the motor vehicle (509) has stopped in front of the one or more collision objects (403, 513), wherein an uncontrolled rolling-away movement of the motor vehicle (509) is ruled out when the inspection has revealed that the motor vehicle (509) has stopped in front of the one or more collision objects (403, 513).

8. Method according to one of the preceding claims, wherein a movement of the motor vehicle (509) on the ramp (507) is monitored (201) by way of a monitoring apparatus (523), wherein the one or more collision objects (403, 513) are moved (205) into the route on the basis of the monitoring.

9. Device (401, 521) for protecting against movement of a motor vehicle (509) on an inclined ramp (507) in a parking space, comprising one or more collision objects (403, 513) and a movement apparatus (405, 515) for moving the one or more collision objects (403, 513) into a route predefined by the ramp (507), sloping away from the motor vehicle (509), in order to be able to reduce a speed of the motor vehicle (509) still on the ramp (507) in the event of a rolling-away movement of the motor vehicle (509) on the route through collision between the one or more collision objects (403, 513) and the motor vehicle (509), **characterized in that** provision is made for a communication interface that is designed to receive a fault message transmitted by the motor vehicle (509) via a communication network, wherein the movement apparatus (405, 515) is designed to move the one or more collision objects (403, 513) into the route in response to the received fault message.

10. Device (401, 521) according to Claim 9, wherein the one or more collision objects (403, 513) comprise one or more elements selected from the following group of collision objects (403, 513): barrier (513), bollard, safety net, safety wire.

11. Device (401, 521) according to Claim 10, wherein the movement apparatus (405, 515) is designed to move the barrier (513) into the route from above or from below or from the side.

12. Device (401, 521) according to Claim 10 or 11, wherein the movement apparatus (405, 515) is designed to move the bollard into the route from the ground.

13. Device (401, 521) according to one of Claims 9 to 12, wherein provision is made for a communication interface that is designed to receive an activation signal, transmitted by the motor vehicle (509) via a communication network, for activating the movement apparatus (405, 515) so as to move the one or more collision objects (403, 513) into the route of the motor vehicle (509), wherein the movement apparatus (405, 515) is designed to move the one or more collision objects (403, 513) into the route in response to the received activation signal.

14. Device (401, 521) according to one of Claims 9 to 13, wherein provision is made for an inspection apparatus that is designed to check whether it is possible to rule out an uncontrolled rolling-away movement of the motor vehicle (509) on the route, wherein the movement apparatus (405, 515) is designed, following the movement of the one or more collision objects (403, 513) into the route, to move the one or more collision objects (403, 513) back out of the route so as to clear the route only when the inspection has revealed that an uncontrolled rolling-away movement of the motor vehicle (509) on the route is able to be ruled out.

15. Device (401, 521) according to Claim 14, wherein the inspection apparatus is designed to check whether the motor vehicle (509) has stopped in front of the one or more collision objects (403, 513), wherein the inspection apparatus is designed to rule out an uncontrolled rolling-away movement of the motor vehicle (509) on the route when the inspection has revealed that the motor vehicle (509) has stopped in front of the one or more collision objects (403, 513).

16. Device (401, 521) according to one of Claims 9 to 15, wherein provision is made for a monitoring apparatus (523) that is designed to monitor a movement of the motor vehicle (509) on the ramp (507), wherein the movement apparatus (405, 515) is designed to move the one or more collision objects (403, 513) into the route on the basis of the monitoring.

17. Parking space (501) comprising an inclined ramp (507) and the device (401, 521) according to one of Claims 9 to 16.

18. Computer program, comprising program code for performing the method according to one of Claims 1 to 8 when the computer program is executed on a computer.

## Revendications

1. Procédé permettant de sécuriser un déplacement d'un véhicule automobile (509) sur une rampe inclinée (507) d'un parc de stationnement, un ou plusieurs objets de collision (403, 513) étant déplacés (101, 205, 303) en pente par rapport au véhicule automobile (509) sur un chemin prédéfini par la rampe (507) afin de réduire une vitesse du véhicule automobile (509) toujours sur la rampe (507), dans le cas d'un déplacement en pente du véhicule automobile (509) sur le chemin, par une collision dudit un ou des plusieurs objets de collision (403, 513) avec le véhicule automobile (509),
**caractérisé en ce qu'**un message d'erreur émis par le véhicule automobile (509) est reçu (301) par une interface de communication par l'intermédiaire d'un réseau de communication, ledit un ou les plusieurs objets de collision (403, 513) étant déplacés (303) sur le chemin par un dispositif de déplacement (405, 515) en réponse au message d'erreur reçu.

2. Procédé selon la revendication 1, dans lequel ledit un ou les plusieurs objets de collision (403, 513) comprennent un ou plusieurs éléments sélectionnés dans le groupe suivant d'objets de collision (403, 513) : une barrière (513), un poteau, un filet de sécurité, un câble de sécurité.

3. Procédé selon la revendication 2, dans lequel la barrière (513) est déplacée sur le chemin par le haut ou par le bas ou par le côté.

4. Procédé selon la revendication 2 ou 3, dans lequel le poteau est déplacé sur le chemin en sortant du sol.

5. Procédé selon l'une quelconque des revendications précédentes, dans lequel un signal d'activation émis par le véhicule automobile (509) pour activer un dispositif de déplacement (405, 515) afin de déplacer ledit un ou les plusieurs objets de collision (403, 513) sur le chemin du véhicule automobile (509) est reçu par l'intermédiaire d'un réseau de communication, le dispositif de déplacement (405, 515) étant activé en réponse au signal d'activation reçu afin de déplacer sur le chemin ledit un ou les plusieurs objets de collision (403, 513).

6. Procédé selon l'une quelconque des revendications précédentes, dans lequel, après le déplacement sur le chemin dudit un ou des plusieurs objets de collision (403, 513), ledit un ou les plusieurs objets de collision (403, 513) ne sont ressortis du chemin pour libérer le chemin que lorsqu'une vérification a établi qu'un déplacement incontrôlé en pente du véhicule automobile (509) sur le chemin peut être exclu.

7. Procédé selon la revendication 6, dans lequel la vérification comprend la vérification que le véhicule automobile (509) s'arrête devant ledit un ou les plusieurs objets de collision (403, 513), un déplacement incontrôlé en pente du véhicule automobile (509) étant exclu si la vérification a établi que le véhicule automobile (509) s'arrête devant ledit un ou les plusieurs objets de collision (403, 513).

8. Procédé selon l'une quelconque des revendications précédentes, dans lequel un déplacement du véhicule automobile (509) sur la rampe (507) est surveillé (201) au moyen d'un dispositif de surveillance (523), ledit un ou les plusieurs objets de collision (403, 513) étant déplacés (205) sur le chemin en fonction de la surveillance.

9. Dispositif (401, 521) permettant de sécuriser un déplacement d'un véhicule automobile (509) sur une rampe inclinée (507) d'un parc de stationnement, comprenant un ou plusieurs objets de collision (403, 513) et un dispositif de déplacement (405, 515) pour déplacer ledit un ou les plusieurs objets de collision (403, 513) sur un chemin prédéfini par la rampe (507) en pente par rapport au véhicule automobile (509) afin de pouvoir réduire une vitesse du véhicule automobile (509) toujours sur la rampe (507), dans le cas d'un déplacement en pente du véhicule automobile (509) sur le chemin, par une collision dudit un ou des plusieurs objets de collision (403, 513) avec le véhicule automobile (509),
**caractérisé en ce qu'**une interface de communication est prévue qui est réalisée pour recevoir par l'intermédiaire d'un réseau de communication un message d'erreur émis par le véhicule automobile (509), le dispositif de déplacement (405, 515) étant réalisé pour déplacer ledit un ou les plusieurs objets de collision (403, 513) sur le chemin en réponse au message d'erreur reçu.

10. Dispositif (401, 521) selon la revendication 9, dans lequel ledit un ou les plusieurs objets de collision (403, 513) comprennent un ou plusieurs éléments sélectionnés dans le groupe suivant d'objets de collision (403, 513) : une barrière (513), un poteau, un filet de sécurité, un câble de sécurité.

11. Dispositif (401, 521) selon la revendication 10, dans lequel le dispositif de déplacement (405, 515) est réalisé pour déplacer la barrière (513) sur le chemin par le haut ou par le bas ou par le côté.

12. Dispositif (401, 521) selon la revendication 10 ou 11, dans lequel le dispositif de déplacement (405, 515) est réalisé pour déplacer le poteau sur le chemin en le sortant du sol.

13. Dispositif (401, 521) selon l'une quelconque des revendications 9 à 12, dans lequel une interface de communication est prévue qui est réalisée pour recevoir par l'intermédiaire d'un réseau de communication un signal d'activation émis par le véhicule automobile (509) pour activer le dispositif de déplacement (405, 515) afin de déplacer ledit un ou les plusieurs objets de collision (403, 513) sur le chemin du véhicule automobile (509), le dispositif de déplacement (405, 515) étant réalisé pour déplacer sur le chemin ledit un ou les plusieurs objets de collision (403, 513) en réponse au signal d'activation reçu.

14. Dispositif (401, 521) selon l'une quelconque des revendications 9 à 13, dans lequel un dispositif de vérification est prévu qui est réalisé pour vérifier si un déplacement incontrôlé en pente du véhicule automobile (509) sur le chemin est exclu, le dispositif de déplacement (405, 515) étant réalisé, après le déplacement dudit un ou des plusieurs objets de collision (403, 513) sur le chemin, pour ne ressortir ledit un ou les plusieurs objets de collision (403, 513) du chemin pour libérer le chemin que lorsque la vérification a établi qu'un déplacement incontrôlé en pente du véhicule automobile (509) sur le chemin peut être exclu.

15. Dispositif (401, 521) selon la revendication 14, dans lequel le dispositif de vérification est réalisé pour vérifier si le véhicule automobile (509) s'arrête devant ledit un ou les plusieurs objets de collision (403, 513), le dispositif de vérification étant réalisé pour exclure tout déplacement incontrôlé en pente du véhicule automobile (509) sur le chemin si la vérification a établi que le véhicule automobile (509) s'arrête devant ledit un ou les plusieurs objets de collision (403, 513).

16. Dispositif (401, 521) selon l'une quelconque des revendications 9 à 15, dans lequel un dispositif de surveillance (523) est prévu qui est réalisé pour surveiller un déplacement du véhicule automobile (509) sur la rampe (507), le dispositif de déplacement (405, 515) étant réalisé pour déplacer sur le chemin ledit un ou les plusieurs objets (403, 513) en fonction de la surveillance.

17. Parc de stationnement (501), comprenant une rampe inclinée (507) et le dispositif (401, 521) selon l'une quelconque des revendications 9 à 16.

18. Programme informatique, comprenant du code programme pour exécuter le procédé selon l'une quelconque des revendications 1 à 8 si le programme informatique est exécuté sur un ordinateur.
